# EUROPEAN PATENT SPECIFICATION

(11) **EP 4 287 550 B1**
(45) Date of publication and mention of the grant of the patent: **07.10.2026**
(21) Application number: 22749258.4
(22) Date of filing: 08.02.2022
(51) Int. Cl.: H04L 9/00, H04L 9/40

(54) **PACKET PROCESSING METHOD, CLIENT END DEVICE, SERVER END DEVICE, AND COMPUTER-READABLE MEDIUM**
PAKETVERARBEITUNGSVERFAHREN, CLIENT-ENDVORRICHTUNG, SERVER-ENDVORRICHTUNG UND COMPUTERLESBARES MEDIUM
PROCÉDÉ DE TRAITEMENT DE PAQUETS, DISPOSITIF D´EXTRÉMITÉ DE CLIENT, DISPOSITIF D´EXTRÉMITÉ DE SERVEUR ET SUPPORT LISIBLE PAR ORDINATEUR

(30) Priority: 08.02.2021 CN 202110184521
(43) Date of publication of application: 06.12.2023
(73) Proprietor: ZTE Corporation, Shenzhen, Guangdong 518057 (CN)
(72) Inventor: ZHOU, Na, Shenzhen, Guangdong 518057 (CN); YAN, Xincheng, Shenzhen, Guangdong 518057 (CN); PENG, Shaofu, Shenzhen, Guangdong 518057 (CN)
(74) Representative: Canzler & Bergmeier Patentanwälte Partnerschaft mbB
(86) International application number: PCT/CN2022/075472
(87) International publication number: WO 2022/166979

(56) References cited:
- CN-A- 102 281 261
- CN-A- 111 010 274
- CN-A- 111 010 274
- US-A1- 2008 235 336
- US-A1- 2012 137 123
- US-A1- 2018 054 825
- US-A1- 2019 342 263
- DICKINSON SINODUN IT B OVEREINDER R VAN RIJSWIJK-DEIJ NLNET LABS A MANKIN SALESFORCE S: "Recommendations for DNS Privacy Service Operators; rfc8932.txt", 23 October 2020 (2020-10-23), pages 1 - 22, XP015142136, Retrieved from the Internet <URL:https://tools.ietf.org/html/rfc8932> [retrieved on 20201023]

## Description

### TECHNICAL FIELD

The present disclosure relates to the field of communication technologies, and in particular, to a packet processing method, a client end device, a server end device, and a computer-readable medium.

### BACKGROUND

As a network forwarding technology, a segment routing IPv6 (SRv6) architecture is designed based on a source routing concept, and by means of a forwarding mechanism of Internet Protocol Version 6 (IPv6), an a forwarding of an IPv6 data packet is implemented by performing a new extension in an IP extension header, and a newly added extension part is called a segment routing header (SRH). The SRH includes an IPv6 address stack, and a destination address is updated according to a sequence of intermediate nodes, so that a hop-by-hop forwarding of the packet in a network is completed.

In a packet transmission process, the intermediate nodes in a link can obtain information of network elements at a source end and a destination end by parsing the packet, so that a third party may intercept the packet by improper means and obtains relevant information of a host and a server by parsing the packet, and a safety of packet transmission cannot be guaranteed.

Chinese Patent Application CN 111010274 A discloses a safe and low-overhead SRv6 implementation method relates to the technical field of data communication networks, according to the method, the segment routing overhead of the SRv6 is reduced, and the routing information is effectively prevented from being eavesdropped, tampered and forged in the transmission process and the storage process of the routing information.

### SUMMARY

It is therefore the object of the present invention to provide an improved a packet processing method, performed by a client end device, a packet processing method, performed by a server end device, an improved correspoding client end device, an improved correspoding server end device, and corresponding computer-readable media having a computer program stored thereon.

The invention is set out in the appended set of claims.

### BRIEF DESCRIPTION OF DRAWINGS

Fig. 1 is a schematic structural diagram of a network architecture according to the present disclosure;
Fig. 2 is a flowchart of a packet processing method according to the present disclosure;
Fig. 3 is a flowchart of a packet processing method according to the present disclosure;
Fig. 4 is a flowchart of a packet processing method according to the present disclosure;
Fig. 5 is a flowchart of an implementation of operation S2 according to the present disclosure;
Fig. 6 is a flowchart of a packet processing method according to the present disclosure;
Fig. 7 is a flowchart of a packet processing method according to the present disclosure;
Fig. 8 is a flowchart of a packet processing method according to the present disclosure;
Fig. 9 is a flowchart of an implementation of operation S9 according to the present disclosure;
Fig. 10 is a flowchart of a packet processing method according to the present disclosure;
Fig. 11 is a flowchart of a packet processing method according to the present disclosure;
Fig. 12 is a flowchart of a packet processing method according to the present disclosure;
Fig. 13 is a flowchart of a packet processing method according to the present disclosure;
Fig. 14 is a schematic structural diagram of a client end device according to the present disclosure;
Fig. 15 is a schematic structural diagram of a server end device according to the present disclosure; and
Fig. 16 is a schematic structural diagram of a computer-readable medium according to the present disclosure.

### DETAIL DESCRIPTION OF EMBODIMENTS

In order to make those skilled in the art better understand the technical solutions of the present disclosure, a packet processing method, a client end device, a server end device and a computer-readable medium provided in the present disclosure are further described in detail below with reference to the accompanying drawings.

Exemplary embodiments are described in detail below with reference to the accompanying drawings, but may be embodied in different forms, and should not be construed as a limitation. The embodiments are illustrated to make the present disclosure more thorough and complete, and for those skilled in the art fully understanding the scope of the present disclosure.

The terms used in the present disclosure are for a purpose of describing particular embodiments only, and are not intended to limit the present disclosure. As used in the present disclosure, singular forms "a" and "the" are intended to include plural forms as well, i.e., to represent at least one, unless the context clearly defines otherwise. It should further be understood that terms "includes/comprises" and/or "made of/consisted of" in the present disclosure are used to specify a presence of at least one of recited features, integers, steps, operations, elements or components, but do not preclude a presence or an addition of at least one of other features, integers, steps, operations, elements, components or groups thereof.

It should be understood that the terms "first", "second" and the like in the present disclosure are used for describing various elements, but the various elements are not limited by the terms. The terms are only used to distinguish one element from another. Thus, a first service packet discussed below could be termed a second service packet without departing from the teachings of the present disclosure.

Unless otherwise defined, meanings of all terms (including technical terms and scientific terms) used herein are the same as meanings commonly understood by one of ordinary skill in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

With the packet processing method, the client end device, the server end device and the computer-readable medium provided in the present disclosure, in a service packet transmission process, for a sending end in each of the client end device and the server end device, and for a service packet, to be sent, having a specific type of segment identifier corresponding to a receiving end as a destination address, the sending end replaces a source address of the service packet with a specific type of segment identifier corresponding to the sending end, and after encrypting the source address and the destination address of the service packet according to the specific type of segment identifier corresponding to the receiving end, sends the service packet; the receiving end receives the service packet and decrypts the destination address of the service packet, and replaces the destination address of the service packet with an address corresponding to the receiving end, so that a protection for information of network elements of the receiving end and the sending end of the service packet is implemented, and a safety problem of the packet transmission in a network is effectively solved.

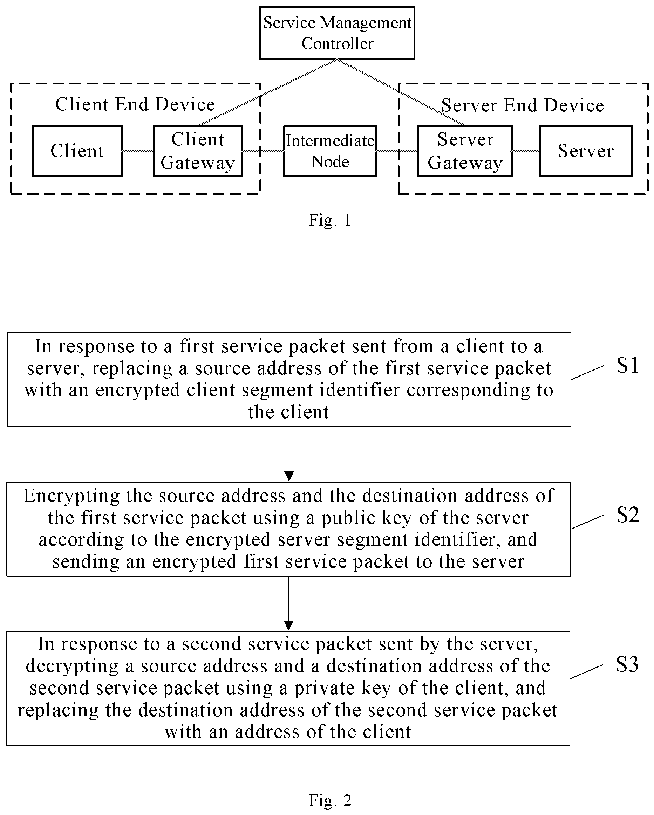

Fig. 1 is a schematic structural diagram of a network architecture according to the present disclosure. As shown in Fig. 1, the network architecture includes a client end device, an intermediate node, a server end device, and a service management controller.

The network architecture is a SRv6 architecture, the client end device and the server end device perform service packet transmission through the intermediate node, and the intermediate node is a segment routing node. Specifically, the client end device includes a client and a client gateway, the client is a device accessing a network through the client gateway, expects to communicate with the server, and includes a personal computer, a tablet, a mobile terminal and the like; the server end device includes a server and a server gateway, the server can access the network through the server gateway; the service management controller is in a control layer and is configured to manage and control a service communication between the server and the client; in some implementations, the segment routing node may include a provider, a provider edge (PE), an autonomous system boundary router (ASBR), an area border router (ABR) and the like.

Fig. 2 is a flowchart of a packet processing method according to the present disclosure. As shown in Fig. 2, the packet processing method is applied to a client end device, and includes following operations S1 to S3.

At operation S1, in response to a first service packet sent from a client to a server, replacing a source address of the first service packet with an encrypted client segment identifier corresponding to the client.

In some implementations, the client end device includes the client, the packet processing method is executed by the client; or, in some implementations, the client end device further includes a client gateway corresponding to the client, and in this case, the packet processing method is executed by the client gateway.

In operation S1, a destination address of the first service packet is an encrypted server segment identifier corresponding to the server. Specifically, in the SRv6 architecture, a corresponding segment identifier (SID) is configured for a network address, the SID has an explicit indication function and is a network instruction; in a case where a corresponding service packet passes through an intermediate node, the intermediate node reads a segment identifier carried in a SRH of the service packet and a series of indication operations (also referred to as segment operations) corresponding to the segment identifier, and completes a corresponding forwarding action to forward the service packet according to the segment identifier and the indication operations, the indication operations are used for indicating a route and a transmission of data (e.g., the service packet) in the network.

In operation S1, the encrypted client segment identifier and the encrypted server segment identifier are respectively specific types of segment identifiers pre-configured for the client and the server, and are different from other existing types of SIDs, the specific types of segment identifiers are not used to indicate an existing forwarding action, but are used to indicate an encrypted forwarding action, i.e., the encrypted client segment identifier and the encrypted server segment identifier are not only used to indicate the route and the transmission of data (e.g., the service packet) in the network, but also to indicate that the source address and destination address of the corresponding service packet are to be encrypted, therefore, the encrypted client segment identifier and the encrypted server segment identifier do not indicate that the segment identifiers themselves are encrypted, but are used to refer to the encrypted forwarding action mentioned above.

In some implementations, a type field "END.S.DECI" may be used to flag the specific type of segment identifier. In some implementations, a mapping relationship between the specific type of segment identifier and an address of a corresponding device (e.g., the client, the server) may be established by a configuration manner or based on a routing protocol in a service authorization process.

At operation S2, encrypting the source address and the destination address of the first service packet using a public key of the server according to the encrypted server segment identifier, and sending an encrypted first service packet to the server.

Specifically, according to an encrypted forwarding action indicated by the encrypted server segment identifier, the public key of the server is used for encrypting the source address and the destination address of the first service packet, and the encrypted first service packet is sent to the server, and represents a first service packet with the encrypted source address and the encrypted destination address. Specifically, in some implementations, parameters of the source address and the destination address are encrypted.

The public key of the server belongs to a public and private key pair of the server, the public and private key pair of the server may be pre-configured by the server, or be pre-configured by the service management controller and then issued to the server, and the client end device can acquire the public key of the server in advance.

At operation S3, in response to a second service packet sent by the server, decrypting a source address and a destination address of the second service packet using a private key of the client, and replacing the destination address of the second service packet with an address of the client.

Specifically, the destination address of the second service packet is the encrypted client segment identifier encrypted by the server end device using a public key of the client; the private key of the client belongs to a public and private key pair of the client, the public and private key pair may be pre-configured by the client, or be pre-configured by the service management controller and then issued to the client, the server end device can acquire the public key of the client in advance.

In some implementations, the packet processing method further includes: decrypting the source address of the second service packet using the private key of the client.

Specifically, the source address of the second service packet is an encrypted server segment identifier encrypted by the server using the public key of the client.

In some implementations, the destination address of the second service packet may be decrypted by the client gateway, and after the destination address of the second service packet is replaced with the address of the client, the second service packet is sent to the client.

With the packet processing method provided in the present disclosure, in a service packet transmission process, for a service packet, to be sent, having a specific type of segment identifier corresponding to the server as a destination address, the client end device replaces a source address of the service packet with a specific type of segment identifier corresponding to the client, and after encrypting the source address and the destination address of the service packet according to the specific type of segment identifier corresponding to the server, sends an encrypted service packet to the server; for a service packet returned by the server end device, a destination address of the service packet is decrypted and replaced with the address corresponding to the client, so that a protection for information of network elements of the receiving end and the sending end of the service packet is implemented, and a safety problem of the packet transmission in a network is effectively solved.

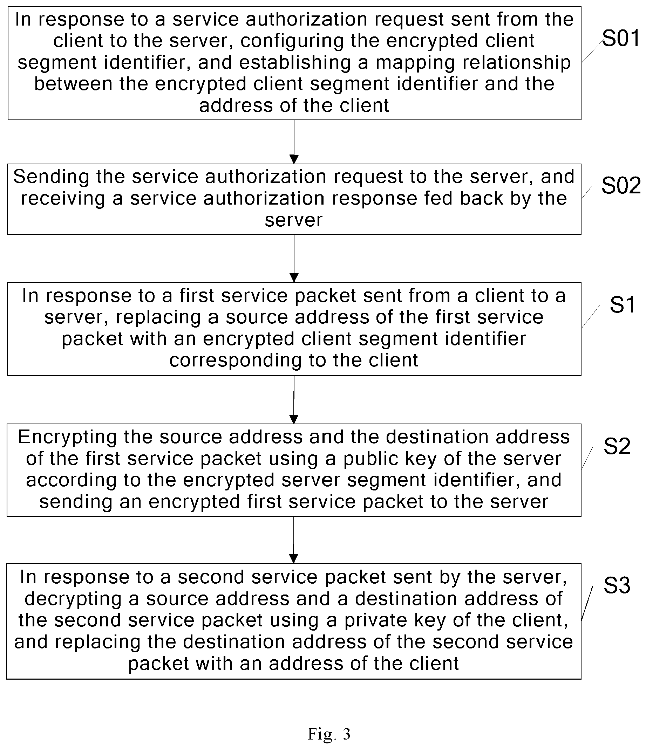

Fig. 3 is a flowchart of a packet processing method according to the present disclosure. As shown in Fig. 3, the packet processing method is an implementation based on the packet processing method shown in Fig. 2. Specifically, the packet processing method includes not only operations S1 to S3 described above, but also operations S01 and S02 before operation S1. Only operations S01 and S02 are described in detail below.

At operation S01, in response to a service authorization request sent from the client to the server, configuring the encrypted client segment identifier, and establishing a mapping relationship between the encrypted client segment identifier and the address of the client.

Specifically, the client sends the service authorization request to the server to pre-establish a relationship of service communication. In some implementations, the client may also send the service authorization request to the service management controller for performing a service authorization.

Specifically, the segment identifier includes a field of Locator, a field of Function, a field of Argument, and the like; the field of Locator mainly undertakes a routing function and is unique in a segmented routing domain; the field of Function undertakes a function of identifying devices, such as a forwarding function, a service function and the like; and for the specific types of segment identifiers provided in the present disclosure, in some implementations, by establishing a mapping relationship between a reference field and the address of the client using at least part of the field of Argument as the reference field, the mapping relationship between the encrypted client segment identifier and the address of the client is established.

In some implementations, the packet processing method further includes: performing a routing advertisement for the encrypted client segment identifier through an interior gateway protocol (IGP).

At operation S02, sending the service authorization request to the server, and receiving a service authorization response fed back by the server.

Specifically, the service authorization response includes the encrypted server segment identifier, and thus the client end device obtains the encrypted server segment identifier corresponding to an address of the server, the encrypted server segment identifier can actually serve as the address of the server at the client end device.

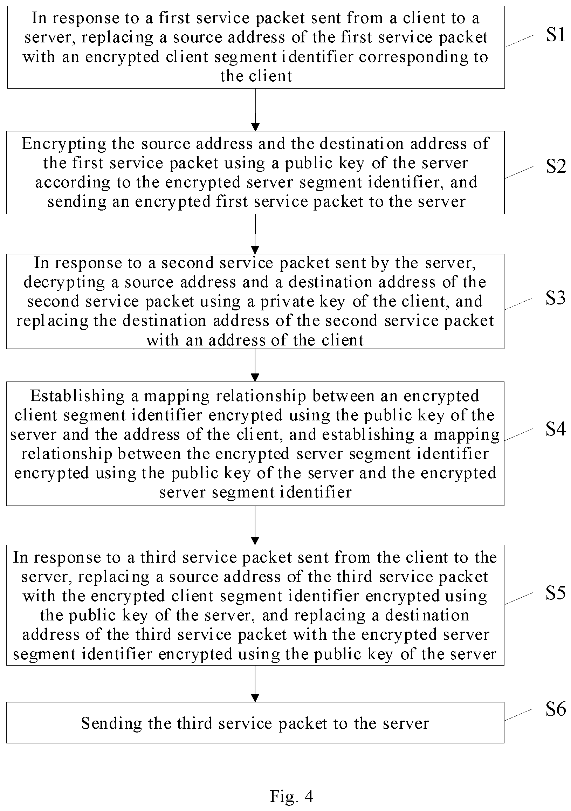

Fig. 4 is a flowchart of a packet processing method according to the present disclosure. As shown in Fig. 4, the packet processing method is an implementation based on the packet processing method shown in Fig. 2. Specifically, the packet processing method includes not only operations S1 to S3 described above, but also operations S4 to S6. Only operations S4 and S6 are described in detail below.

At operation S4, establishing a mapping relationship between an encrypted client segment identifier encrypted using the public key of the server and the address of the client, and establishing a mapping relationship between the encrypted server segment identifier encrypted using the public key of the server and the encrypted server segment identifier.

In some implementations, encrypting the specific type of segment identifier using the public key of the server includes: encrypting the reference field of the specific type of segment identifier using the public key of the server. Thus, in some implementations, similar to operation S01, in operation S4, a mapping relationship between the reference field of the segment identifier encrypted using the public key of the server and the address of the client is established, so as to establish a mapping relationship between the specific type of segment identifier encrypted using the public key of the server and the address of the client.

At operation S5, in response to a third service packet sent from the client to the server, replacing a source address of the third service packet with the encrypted client segment identifier encrypted using the public key of the server, and replacing a destination address of the third service packet with the encrypted server segment identifier encrypted using the public key of the server.

Specifically, the destination address of the third service packet is the encrypted server segment identifier; in operation S5, by establishing the mapping relationship between the encrypted specific type of segment identifier and the corresponding address in advance, the client end device can directly replace the source address and the destination address of the service packet during the service packet being sent or forwarded, thereby reducing a response delay.

At operation S6, sending the third service packet to the server.

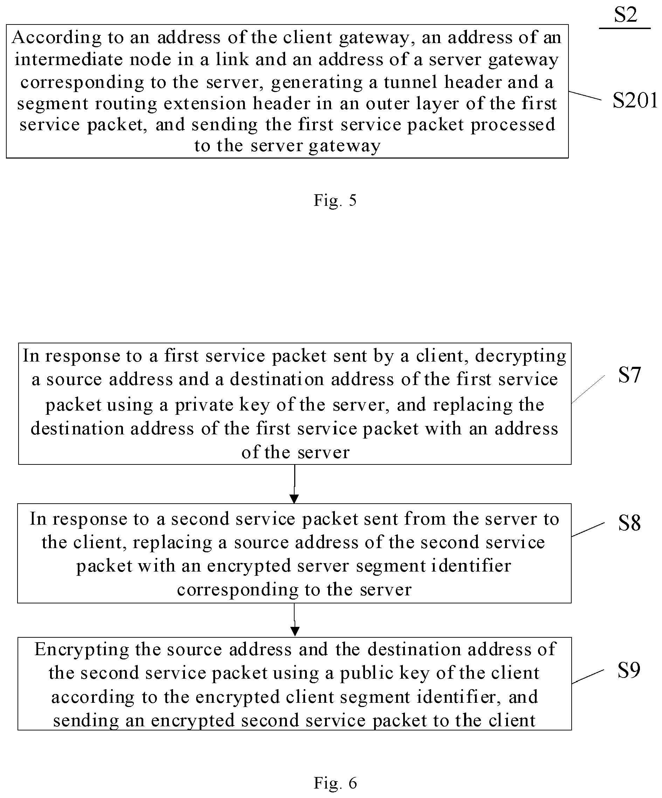

Fig. 5 is a flowchart of an implementation of operation S2 according to the present disclosure. Specifically, the client end device further includes a client gateway; and as shown in Fig. 5, operation S2 includes operation S201.

At operation S201, according to an address of the client gateway, an address of an intermediate node in a link and an address of a server gateway corresponding to the server, generating a tunnel header and a segment routing extension header in an outer layer of the first service packet, and sending the first service packet processed above to the server gateway.

In operation S201, since the first service packet is to be sent to the server via the client gateway and the segment routing node in the communication link, the first service packet is subjected to an outer encapsulation according to the address of the client gateway, an address of the segment routing node, and the address of the server gateway, so as to add the tunnel header and the segment routing extension header to the first service packet. Therefore, in the packet processing method described above, during a service packet passing through the segment routing node, a destination address of the service packet is replaced based on a mechanism of a segment routing protocol, and in the implementations, after the service packet is subjected to an outer encapsulation with a tunnel header, during the service packet passing through the segment routing node, a destination address in the outer layer of the service packet is replaced based on the mechanism of the segment routing protocol.

Therefore, the packet processing method provided in the present disclosure can protect the service packet transmission through a tunneling technology and configuring the specific types of segment identifies.

Fig. 6 is a flowchart of a packet processing method according to the present disclosure. As shown in Fig. 6, the packet processing method is applied to a server end device including a server, and includes following operations S7 to S9.

At operation S7, in response to a first service packet sent by a client, decrypting a source address and a destination address of the first service packet using a private key of the server, and replacing the destination address of the first service packet with an address of the server.

Specifically, the source address of the first service packet is an encrypted client segment identifier encrypted by a client end device using a public key of the server, and the destination address of the first service packet is an encrypted server segment identifier encrypted by the client end device using the public key of the server; the private key of the server belongs to a public and private key pair of the server, the public and private key pair may be pre-configured by the server, or be pre-configured by the service management controller and then issued to the server, and the client end device can acquire the public key of the server in advance.

In some implementations, the server end device includes a server, the packet processing method is executed by the server; or, in some implementations, the server end device further includes a server gateway corresponding to the server, and in this case, the packet processing method is executed by the server gateway.

In some implementations, the packet processing method further includes: decrypting the source address of the first service packet using the private key of the server.

Specifically, the source address of the first service packet is the encrypted client segment identifier encrypted by the client end device using the public key of the server.

In some implementations, the packet processing method may be executed by the server gateway, so that the server gateway can decrypt the destination address of the first service packet, replace the destination address of the first service packet with the address of the server, and then send the first service gateway to the server.

At operation S8, in response to a second service packet sent from the server to the client, replacing a source address of the second service packet with an encrypted server segment identifier corresponding to the server.

Specifically, a destination address of the second service packet is an encrypted client segment identifier corresponding to the client.

At operation S9, encrypting the source address and the destination address of the second service packet using a public key of the client according to the encrypted client segment identifier, and sending an encrypted second service packet to the client.

Specifically, according to an encrypted forwarding action indicated by the encrypted client segment identifier, the source address and the destination address of the second service packet are encrypted using the public key of the client, and the encrypted second service packet is sent to the client, and represents a second service packet with the encrypted source address and the encrypted destination address; the public key of the client belongs to a public and private key pair of the client, the public and private key pair may be pre-configured by the client, or be pre-configured by the service management controller and then issued to the client, the server end device can acquire the public key of the client in advance. In some implementations, parameters of the source address and the destination address are encrypted.

With the packet processing method provided in the present disclosure, in a service packet transmission process, for a service packet, to be sent, having a specific type of segment identifier corresponding to the server as a destination address, the server end device replaces a source address of the service packet with a specific type of segment identifier corresponding to the server, and after encrypting the source address and the destination address of the service packet according to the specific type of segment identifier corresponding to the client, sends an encrypted service packet to the client; for a service packet returned by the client end device, a destination address of the service packet is decrypted and replaced with the address corresponding to the server, so that a protection for information of network elements of the receiving end and the sending end of the service packet is implemented, and a safety problem of the packet transmission in a network is effectively solved.

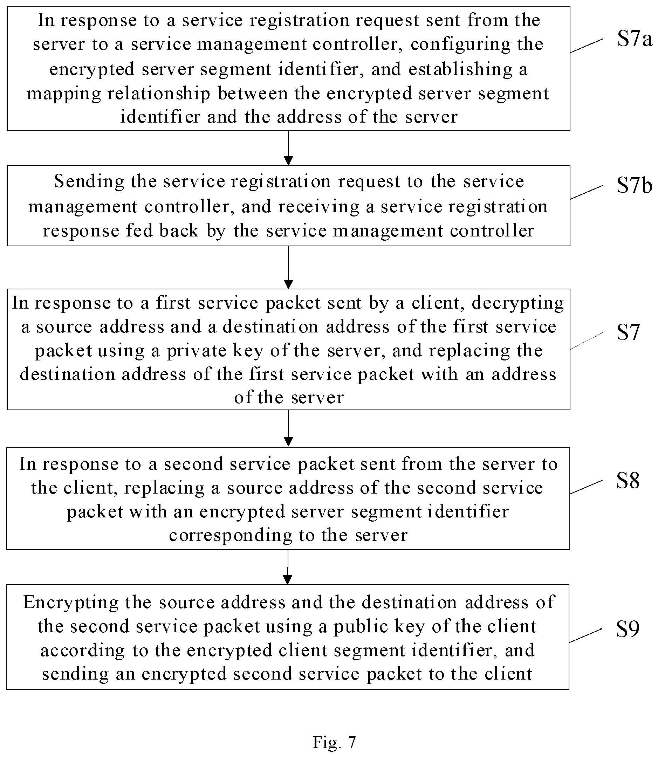

Fig. 7 is a flowchart of a packet processing method according to the present disclosure. As shown in Fig. 7, the packet processing method is an implementation based on the packet processing method shown in Fig. 6. Specifically, the packet processing method includes not only operations S7 to S9 described above, but also operations S7a and S7b before operation S7. Only operations S7a and S7b are described in detail below.

At operation S7a, in response to a service registration request sent from the server to a service management controller, configuring the encrypted server segment identifier, and establishing a mapping relationship between the encrypted server segment identifier and the address of the server.

Specifically, the service registration request may include an identifier of the server, such as a service ID, a server ID, and the like.

In some implementations, by establishing a mapping relationship between a reference field and the address of the server using at least part of the field of Argument as the reference field, the mapping relationship between the encrypted server segment identifier and the address of the server is established.

At operation S7b, sending the service registration request to the service management controller, and receiving a service registration response fed back by the service management controller.

In operation S7b, in response to that the service registration response fed back by the service management controller is received, it indicates that a service registration of the server is successful.

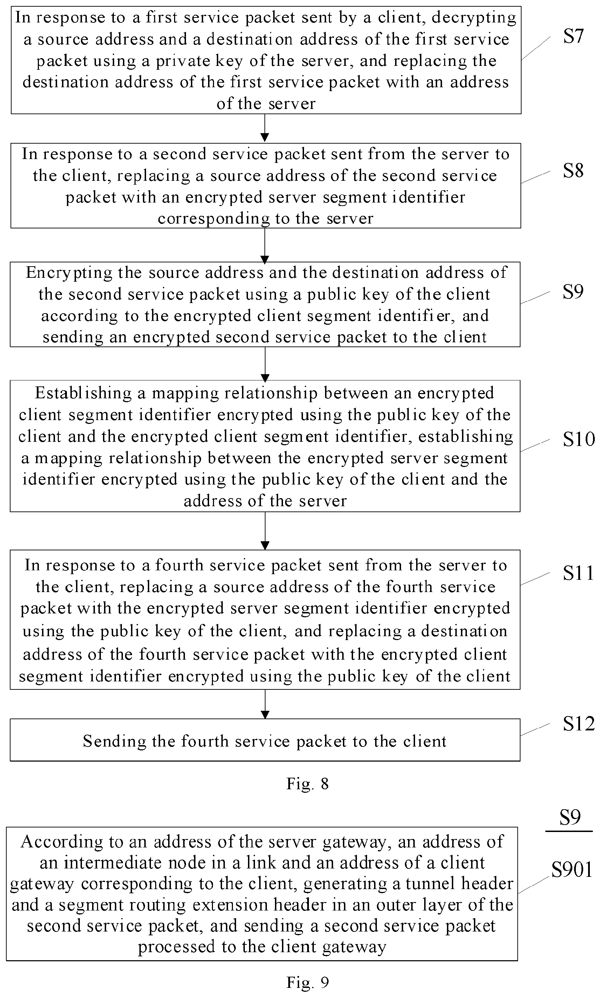

Fig. 8 is a flowchart of a packet processing method according to the present disclosure. As shown in Fig. 8, the packet processing method is an implementation based on the packet processing method shown in Fig. 6. Specifically, the packet processing method includes not only operations S7 to S9 described above, but also operations S10 to S12. Only operations S10 to S12 are described in detail below.

At operation S10, establishing a mapping relationship between an encrypted client segment identifier encrypted using the public key of the client and the encrypted client segment identifier, and establishing a mapping relationship between the encrypted server segment identifier encrypted using the public key of the client and the address of the server.

In some implementations, encrypting the specific type of segment identifier using the public key of the client includes: encrypting the reference field of the specific type of segment identifier using the public key of the client. Thus, in some implementations, similar to operation S7a, in operation S10, a mapping relationship between the reference field of the segment identifier encrypted using the public key of the client and the address of the server is established, so as to establish a mapping relationship between the specific type of segment identifier encrypted using the public key of the client and the address of the server.

At operation S11, in response to a fourth service packet sent from the server to the client, replacing a source address of the fourth service packet with the encrypted server segment identifier encrypted using the public key of the client, and replacing a destination address of the fourth service packet with the encrypted client segment identifier encrypted using the public key of the client.

Specifically, the destination address of the fourth service packet is the encrypted client segment identifier; in operation S11, by establishing the mapping relationship between the encrypted specific type of the segment identifier and the corresponding address in advance, the server end device can directly replace the source address and the destination address of the service packet during the service packet being sent or forwarded, thereby reducing a response delay.

At operation S12, sending the fourth service packet to the client.

Fig. 9 is a flowchart of an implementation of operation S9 according to the present disclosure. As shown in Fig. 9, specifically, the server end device further includes a server gateway; operation S9 includes operation S901.

At operation S901, according to an address of the server gateway, an address of an intermediate node in a link and an address of a client gateway corresponding to the client, generating a tunnel header and a segment routing extension header in an outer layer of the second service packet, and sending the second service packet processed above to the client gateway.

In operation S901, since the second service packet is to be sent to the client via the server gateway and the segment routing node in the communication link, the second service packet is subjected to an outer encapsulation according to the address of the server gateway, an address of the segment routing node, and the address of the client gateway corresponding to the client, so as to add the tunnel header and the segment routing extension header to the second service packet. Therefore, in the packet processing method described above, during a service packet passing through the segment routing node, a destination address of the service packet is replaced based on a mechanism of a segment routing protocol, and in the implementations, after the service packet is subjected to an outer encapsulation with a tunnel header, during the service packet passing through the segment routing node, a destination address in the outer layer of the service packet is replaced based on the mechanism of the segment routing protocol.

The packet processing method provided in the present disclosure is described in detail below with reference to the practical applications.

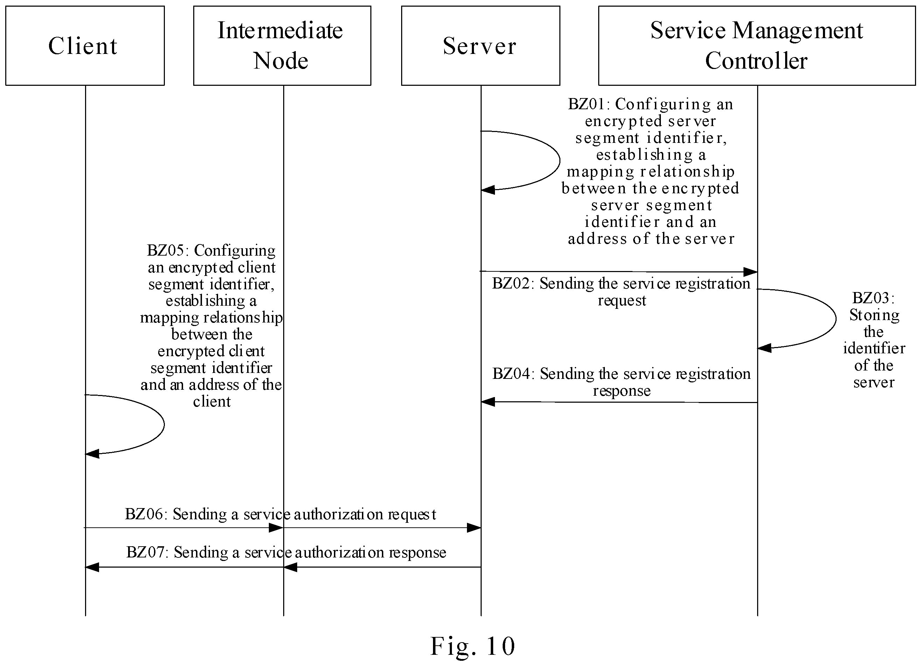

Fig. 10 is a flowchart of a packet processing method according to the present disclosure. As shown in Fig. 10, the packet processing method is applied to an interaction process between a client end device and a server end device via an intermediate node, the client end device includes a client, the server end device includes a server, the number of intermediate nodes may be one or more (only one intermediate node is shown in Fig. 10), the packet processing method includes operation BZ01 to BZ07.

At operation BZ01, the server prepares to send a service registration request to a service management controller, configures an encrypted server segment identifier, and establishes a mapping relationship between the encrypted server segment identifier and an address of the server.

At operation BZ02, the server sends the service registration request including an identifier of the server to the service management controller.

At operation BZ03, the service management controller stores the identifier of the server and completes a service registration of the server.

At operation BZ04, the service management controller sends a service registration response to the server.

At operation BZ05, the client prepares to send a service authorization request to the server, configures an encrypted client segment identifier, and establishes a mapping relationship between the encrypted client segment identifier and an address of the client.

At operation BZ06, the client sends the service authorization request to the server through the intermediate node.

At operation BZ07, the server performs a service authorization and sends a service authorization response including the encrypted server segment identifier to the client through the intermediate node.

So far, the service registration of the server and the service authorization of the client are completed.

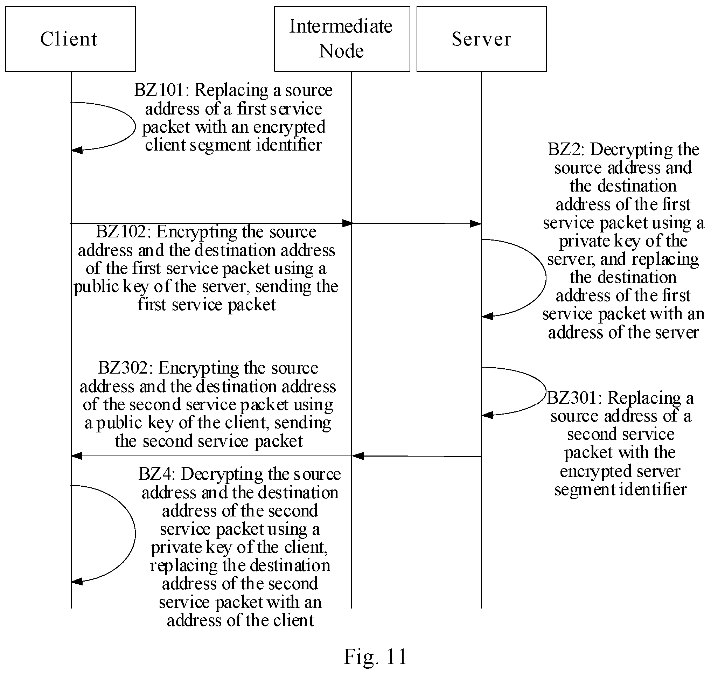

Fig. 11 is a flowchart of a packet processing method according to the present disclosure. As shown in Fig. 11, the packet processing method is applied to an interaction process between a client end device and a server end device via an intermediate node, the client end device includes a client, the server end device includes a server, the number of intermediate nodes may be one or more (only one intermediate node is shown in Fig. 11), the packet processing method includes operation BZ101 to BZ4.

At operation BZ101, the client replaces a source address of a first service packet to be sent to the server with an encrypted client segment identifier, a destination address of the first service packet being an encrypted server segment identifier corresponding to the server.

At operation BZ102, the client encrypts the source address and the destination address of the first service packet using a public key of the server based on an encrypted forwarding action indicated by the encrypted server segment identifier, and then sends the first service packet to the server through the intermediate node.

At operation BZ2, the server decrypts the source address and the destination address of the first service packet using a private key of the server, and replaces the destination address of the first service packet with an address of the server.

At operation BZ301, the server replaces a source address of a second service packet to be sent to the client with the encrypted server segment identifier, a destination address of the second service packet being the encrypted client segment identifier.

At operation BZ302, the server encrypts the source address and the destination address of the second service packet using a public key of the client based on an encrypted forwarding action indicated by the encrypted client segment identifier, and then sends the second service packet to the client through the intermediate node.

At operation BZ4, the client decrypts the source address and the destination address of the second service packet using a private key of the client, and replaces the destination address of the second service packet with an address of the client.

So far, a mutual transmission of service packets between the client and the server is finished.

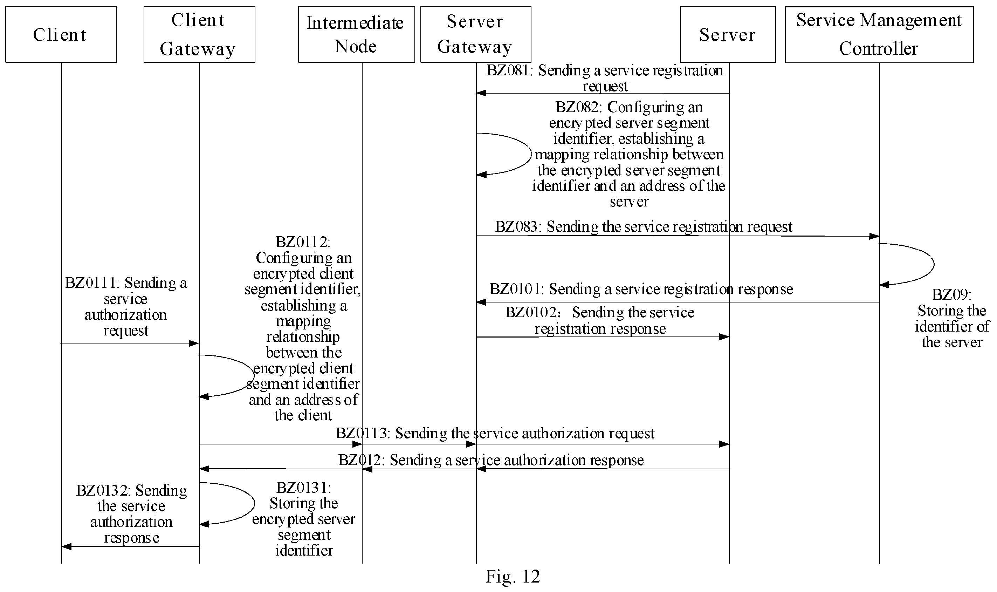

Fig. 12 is a flowchart of a packet processing method according to the present disclosure. As shown in Fig. 12, the packet processing method is applied to an interaction process between a client end device and a server end device via an intermediate node, the client end device includes a client and a client gateway, the server end device includes a server and a server gateway, the number of intermediate nodes may be one or more (only one intermediate node is shown in Fig. 12), the packet processing method includes operation BZ081 to BZ0132.

At operation BZ081, the server sends a service registration request to the server gateway, and the service registration request being to be sent to a service management controller.

At operation BZ082, the server gateway configures an encrypted server segment identifier, and establishes a mapping relationship between the encrypted server segment identifier and an address of the server.

At operation BZ083, the server gateway sends the service registration request including an identifier of the server to the service management controller.

At operation BZ09, the service management controller stores the identifier of the server and completes a service registration of the server.

At operation BZ0101, the service management controller sends a service registration response to the server gateway.

At operation BZ0102, the server gateway sends the service registration response to the server.

At operation BZ0111, the client sends a service authorization request to the client gateway, the service authorization request being to be sent to the server.

At operation BZ0112, the client gateway configures an encrypted client segment identifier, and establishes a mapping relationship between the encrypted client segment identifier and an address of the client.

At operation BZ0113, the client gateway sends the service authorization request to the server through the intermediate node and the server gateway.

At operation BZ012, the server performs a service authorization and sends a service authorization response including the encrypted server segment identifier to the client gateway through the server gateway and the intermediate node,

At operation BZ0131, the client gateway stores the encrypted server segment identifier.

At operation BZ0132, the client gateway sends the service authorization response to the client.

So far, the service registration of the server and the service authorization of the client are completed.

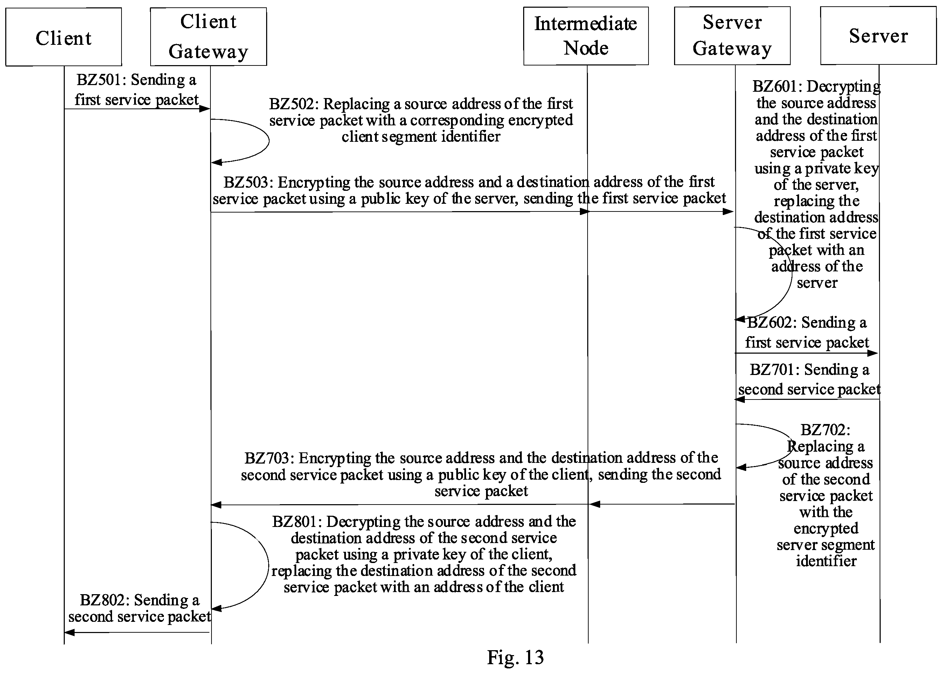

Fig. 13 is a flowchart of a packet processing method according to the present disclosure. As shown in Fig. 13, the packet processing method is applied to an interaction process between a client end device and a server end device via an intermediate node, the client end device includes a client and a client gateway, the server end device includes a server and a server gateway, the number of intermediate nodes may be one or more, the packet processing method includes operation BZ501 to BZ802.

At operation BZ501, the client sends a first service packet to the client gateway, the first service packet being to be sent to the server.

At operation BZ502, the client gateway replaces a source address of the first service packet with a corresponding encrypted client segment identifier.

At operation BZ503, the client gateway encrypts the source address and a destination address of the first service packet using a public key of the server based on an encrypted forwarding action indicated by an encrypted server segment identifier, and then sends the first service packet to the server gateway through the intermediate node.

At operation BZ601, the server gateway decrypts the source address and the destination address of the first service packet using a private key of the server, and replaces the destination address of the first service packet with an address of the server.

At operation BZ602, the server gateway sends the first service packet subjected to operation BZ601 to the server.

At operation BZ701, the server sends a second service packet to the server gateway, the second service packet being to be sent to the client.

At operation BZ702, the server gateway replaces a source address of the second service packet with the encrypted server segment identifier, a destination address of the second service packet being the encrypted client segment identifier.

At operation BZ703, the server gateway encrypts the source address and the destination address of the second service packet using a public key of the client based on an encrypted forwarding action indicated by the encrypted client segment identifier, and then sends the second service packet to the client gateway through the intermediate node.

At operation BZ801, the client gateway decrypts the source address and the destination address of the second service packet using a private key of the client, and replaces the destination address of the second service packet with an address of the client.

At operation BZ802, the client gateway sends the second service packet subjected to operation BZ801 to the client.

So far, a mutual transmission of service packets between the client and the server is finished.

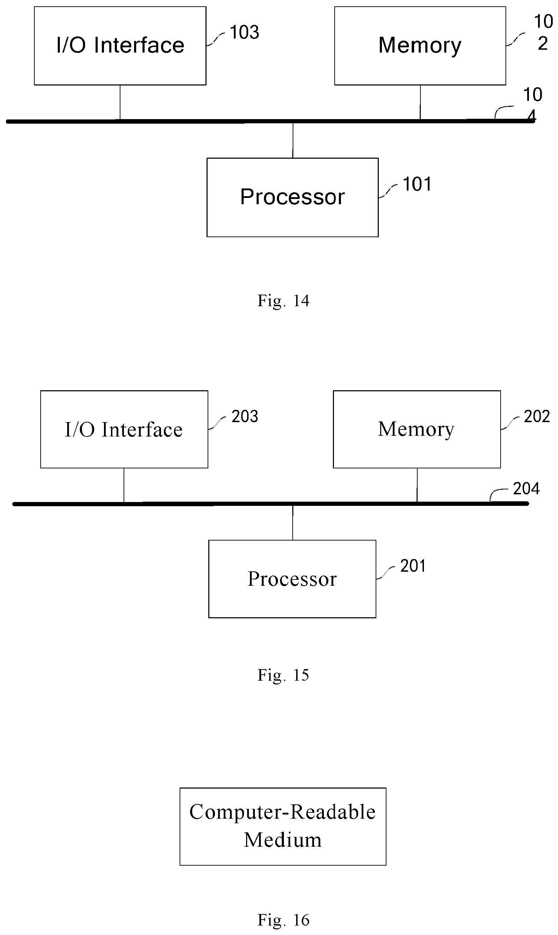

Fig. 14 is a schematic structural diagram of a client end device according to the present disclosure. As shown in Fig. 14, the client end device includes: at least one processor 101; a memory (a storage device) 102 having at least one computer program stored thereon, the at least one computer program, executed by the at least one processor 101, causes the at least one processor 101 to perform the packet processing method, applied to the client end device, described above; and at least one I/O interface 103, connected between the processor 101 and the memory 102, and configured to implement information interaction between the processor 101 and the memory 102.

The processor 101 is a device having a capability of processing data, includes, but is not limited to, a Central Processing Unit (CPU), and the like; the memory 102 is a device having a capability of storing data, includes, but is not limited to, a random access memory (RAM, in particular, SDRAM, DDR, and the like), a read only memory (ROM), an electrically erasable programmable read only memory (EEPROM), and a FLASH; and the I/O interface (read/write interface) 103 is connected between the processor 101 and the memory 102, is configured to implement information interaction between the processor 101 and the memory 102, and includes, but is not limited to, a bus and the like.

In some implementations, the processor 101, the memory 102 and the I/O interface 103 are connected together through the bus 104, and are further connected to other components of a computing device.

In some implementations, the client end device includes a client and a client gateway.

Fig. 15 is a schematic structural diagram of a server end device according to the present disclosure. As shown in Fig. 15, the server end device includes: at least one processor 201; a memory (a storage device) 202 having at least one computer program stored thereon, the at least one computer program, executed by the at least one processor 201, causes the at least one processor 201 to perform the packet processing method, applied to the server end device, described above; and at least one I/O interface 203, connected between the processor 201 and the memory 202, and configured to implement information interaction between the processor 201 and the memory 202.

The processor 201 is a device having a capability of processing data, includes, but is not limited to, a Central Processing Unit (CPU), and the like; the memory 202 is a device having a capability of storing data, includes, but is not limited to, a random access memory (RAM, in particular, SDRAM, DDR, and the like), a read only memory (ROM), an electrically erasable programmable read only memory (EEPROM), and a FLASH; and the I/O interface (read/write interface) 203 is connected between the processor 201 and the memory 202, is configured to implement information interaction between the processor 201 and the memory 202, and includes, but is not limited to, a bus and the like.

In some implementations, the processor 201, the memory 202 and the I/O interface 203 are connected together through the bus 204, and are further connected to other components of a computing device.

In some implementations, the server end device includes a server and a server gateway.

Fig. 16 is a schematic structural diagram of a computer-readable medium according to the present disclosure. The computer-readable medium having a computer program stored thereon, the computer program, executed by a processor, causes the processor to perform the packet processing method, applied to the client end device or the server end device, described above.

It should be understood by those of ordinary skill in the art that all or some of the operations in the packet processing method, the functional modules/components in the devices/apparatuses disclosed above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

The present disclosure discloses the exemplary embodiments, and although specific terms are employed, they are used and should only be interpreted in a generic and descriptive meaning and not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. A packet processing method, performed by a client end device comprising a client, comprising:
replacing a source address of a first service packet to be sent from the client to a server with an encrypted client segment identifier corresponding to the client, a destination address of the first service packet being an encrypted server segment identifier corresponding to the server (S1), the encrypted client segment identifier and the encrypted server segment identifier not only indicating a route and a transmission of the first service packet, but also indicating that the source address and the destination address of the first service packet are to be encrypted;
encrypting the source address and the destination address of the first service packet using a public key of the server according to the encrypted server segment identifier to obtain an encrypted first service packet, and sending the encrypted first service packet to the server (S2); and
receiving a second service packet sent by the server, decrypting a source address and a destination address of the second service packet using a private key of the client, and replacing the destination address of the second service packet with an address of the client, the destination address of the second service packet being the encrypted client segment identifier encrypted by the server end device using a public key of the client (S3).

2. The packet processing method according to claim 1, further comprising:
before replacing the source address of the first service packet to be sent from the client to the server with the encrypted client segment identifier corresponding to the client, in response to a service authorization request sent from the client to the server, configuring the encrypted client segment identifier, and establishing a mapping relationship between the encrypted client segment identifier and the address of the client (S01); and
sending the service authorization request to the server, and receiving a service authorization response fed back by the server, the service authorization response comprising the encrypted server segment identifier (S02).

3. The packet processing method according to claim 1, further comprising:
establishing a mapping relationship between an encrypted client segment identifier encrypted using the public key of the server and the address of the client, and establishing a mapping relationship between the encrypted server segment identifier encrypted using the public key of the server and the encrypted server segment identifier (S4);
replacing a source address of a third service packet to be sent from the client to the server with the encrypted client segment identifier encrypted using the public key of the server, and replacing a destination address of the third service packet with the encrypted server segment identifier encrypted using the public key of the server, the destination address of the third service packet being the encrypted server segment identifier (S5); and
sending the third service packet to the server (S6).

4. The packet processing method according to claim 1, wherein the client end device further comprises a client gateway; and
the sending the encrypted first service packet to the server comprises:
according to an address of the client gateway, an address of an intermediate node in a link and an address of a server gateway corresponding to the server, generating, by the client gateway, a tunnel header and a segment routing extension header in an outer layer of the first service packet, and sending the first service packet processed to the server gateway (S201).

5. A packet processing method, performed by a server end device comprising a server, comprising:
receiving a first service packet sent by a client, decrypting a source address and a destination address of the first service packet using a private key of the server, and replacing the destination address of the first service packet with an address of the server, the source address of the first service packet being an encrypted client segment identifier encrypted by a client end device using a public key of the server, and the destination address of the first service packet being an encrypted server segment identifier encrypted by the client end device using the public key of the server (S7);
replacing a source address of a second service packet to be sent from the server to the client with an encrypted server segment identifier corresponding to the server, a destination address of the second service packet being an encrypted client segment identifier corresponding to the client (S8), the encrypted server segment identifier and the encrypted client segment identifier not only indicating a route and a transmission of the second service packet, but also indicating that the source address and the destination address of the second service packet are to be encrypted; and
encrypting the source address and the destination address of the second service packet using a public key of the client according to the encrypted client segment identifier to obtain an encrypted second service packet, and sending the encrypted second service packet to the client (S9).

6. The packet processing method according to claim 5, further comprising:
before decrypting the source address and the destination address of the first service packet using the private key of the server, in response to a service registration request sent from the server to a service management controller, configuring the encrypted server segment identifier, and establishing a mapping relationship between the encrypted server segment identifier and the address of the server (S7a); and
sending the service registration request to the service management controller, and receiving a service registration response fed back by the service management controller (S7b).

7. The packet processing method according to claim 5, further comprising:
establishing a mapping relationship between an encrypted client segment identifier encrypted using the public key of the client and the encrypted client segment identifier, establishing a mapping relationship between the encrypted server segment identifier encrypted using the public key of the client and the address of the server (S10);
replacing a source address of a fourth service packet to be sent from the server to the client with the encrypted server segment identifier encrypted using the public key of the client, and replacing a destination address of the fourth service packet with the encrypted client segment identifier encrypted using the public key of the client, the destination address of the fourth service packet being the encrypted client segment identifier (S11); and
sending the fourth service packet to the client (S12).

8. The packet processing method according to claim 5, wherein the service device further comprises a server gateway; and
the sending an encrypted second service packet to the client comprises:
according to an address of the server gateway, an address of an intermediate node in a link and an address of a client gateway corresponding to the client, generating, by the server gateway, a tunnel header and a segment routing extension header in an outer layer of the second service packet, and sending a second service packet processed to the client gateway (S901).

9. A client end device, comprising:
at least one processor (101); and
a memory (102) configured to store at least one computer program;
the at least one computer program, executed by the at least one processor (101), causes the at least one processor (101) to implement the packet processing method of any one of claims 1 to 4.

10. A server end device, comprising:
at least one processor (201); and
a memory (202) configured to store at least one computer program;
the at least one computer program, executed by the at least one processor (201), causes the at least one processor (201) to implement the packet processing method of any one of claims 5 to 8.

11. A computer-readable medium having a computer program stored thereon, the computer program, executed by a processor, causes the processor to implement the packet processing method of any one of claims 1 to 4.

12. A computer-readable medium having a computer program stored thereon, the computer program, executed by a processor, causes the processor to implement the packet processing method of any one of claims 5 to 8.

## Patentansprüche

1. Verfahren zum Verarbeiten eines Pakets, das von einer Client-Endvorrichtung durchgeführt wird, die einen Client umfasst, umfassend:
Ersetzen einer Quelladresse eines ersten Service-Pakets, das von dem Client an einen Server gesendet werden soll, durch eine verschlüsselte Client-Segment-Kennung, die dem Client entspricht, wobei eine Zieladresse des ersten Service-Pakets eine verschlüsselte Server-Segment-Kennung ist, die dem Server entspricht (S1), wobei die verschlüsselte Client-Segment-Kennung und die verschlüsselte Server-Segment-Kennung nicht nur eine Route und eine Übertragung des ersten Service-Pakets angeben, sondern auch angeben, dass die Quelladresse und die Zieladresse des ersten Service-Pakets verschlüsselt werden sollen;
Verschlüsseln der Quelladresse und der Zieladresse des ersten Service-Pakets unter Verwenden eines öffentlichen Schlüssels des Servers gemäß der verschlüsselten Server-Segment-Kennung, um ein verschlüsseltes erstes Service-Paket zu erhalten, und Senden des verschlüsselten ersten Service-Pakets an den Server (S2); und
Empfangen eines zweiten Service-Pakets, das von dem Server gesendet wird, Entschlüsseln einer Quelladresse und einer Zieladresse des zweiten Service-Pakets unter Verwenden eines privaten Schlüssels des Clients und Ersetzen der Zieladresse des zweiten Service-Pakets durch eine Adresse des Clients, wobei die Zieladresse des zweiten Service-Pakets die verschlüsselte Client-Segment-Kennung ist, die von der Server-Endvorrichtung unter Verwenden eines öffentlichen Schlüssels des Clients verschlüsselt wird (S3).

2. Verfahren zum Verarbeiten eines Pakets nach Anspruch 1, ferner umfassend:
vor dem Ersetzen der Quelladresse des ersten Service-Pakets, das von dem Client an den Server gesendet werden soll, durch die verschlüsselte Client-Segment-Kennung, die dem Client entspricht, als Reaktion auf eine Service-Autorisierungs-Anforderung, die von dem Client an den Server gesendet wird, Konfigurieren der verschlüsselten Client-Segment-Kennung und Herstellen einer Abbildungsbeziehung zwischen der verschlüsselten Client-Segment-Kennung und der Adresse des Clients (S01); und
Senden der Service-Autorisierungs-Anforderung an den Server und Empfangen einer Service-Autorisierungs-Antwort, die von dem Server zurückgemeldet wird, wobei die Service-Autorisierungs-Antwort die verschlüsselte Server-Segment-Kennung umfasst (S02).

3. Verfahren zum Verarbeiten eines Pakets nach Anspruch 1, ferner umfassend:
Herstellen einer Abbildungsbeziehung zwischen einer verschlüsselten Client-Segment-Kennung, die unter Verwenden des öffentlichen Schlüssels des Servers verschlüsselt wird, und der Adresse des Clients und Herstellen einer Abbildungsbeziehung zwischen der verschlüsselten Server-Segment-Kennung, die unter Verwenden des öffentlichen Schlüssels des Servers verschlüsselt wird, und der verschlüsselten Server-Segment-Kennung (S4);
Ersetzen einer Quelladresse eines dritten Service-Pakets, das von dem Client an den Server gesendet werden soll, durch die verschlüsselte Client-Segment-Kennung, die unter Verwenden des öffentlichen Schlüssels des Servers verschlüsselt wird, und Ersetzen einer Zieladresse des dritten Service-Pakets durch die verschlüsselte Server-Segment-Kennung, die unter Verwenden des öffentlichen Schlüssels des Servers verschlüsselt wird, wobei die Zieladresse des dritten Service-Pakets die verschlüsselte Server-Segment-Kennung ist (S5); und
Senden des dritten Service-Pakets an den Server (S6).

4. Verfahren zum Verarbeiten eines Pakets nach Anspruch 1, wobei die Client-Endvorrichtung ferner ein Client-Gateway umfasst; und
das Senden des verschlüsselten ersten Service-Pakets an den Server umfasst:
gemäß einer Adresse des Client-Gateways, einer Adresse eines Zwischenknotens in einer Verbindung und einer Adresse eines Server-Gateways, das dem Server entspricht, Erzeugen, durch das Client-Gateway, einer Tunnelkopfzeile und einer Segment-Routingerweiterungskopfzeile in einer äußeren Schicht des ersten Service-Pakets, und Senden des verarbeiteten ersten Service-Pakets an das Server-Gateway (S201).

5. Verfahren zum Verarbeiten eines Pakets, das von einer Server-Endvorrichtung durchgeführt wird, die einen Server umfasst, umfassend:
Empfangen eines ersten Service-Pakets, das von einem Client gesendet wird, Entschlüsseln einer Quelladresse und einer Zieladresse des ersten Service-Pakets unter Verwenden eines privaten Schlüssels des Servers und Ersetzen der Zieladresse des ersten Service-Pakets durch eine Adresse des Servers, wobei die Quelladresse des ersten Service-Pakets eine verschlüsselte Client-Segment-Kennung ist, die von einer Client-Endvorrichtung unter Verwenden eines öffentlichen Schlüssels des Servers verschlüsselt wird, und die Zieladresse des ersten Service-Pakets eine verschlüsselte Server-Segment-Kennung ist, die von der Client-Endvorrichtung unter Verwenden des öffentlichen Schlüssels des Servers verschlüsselt wird (S7);
Ersetzen einer Quelladresse eines zweiten Service-Pakets, das von dem Server an den Client gesendet werden soll, durch eine verschlüsselte Server-Segment-Kennung, die dem Server entspricht, wobei eine Zieladresse des zweiten Service-Pakets eine verschlüsselte Client-Segment-Kennung ist, die dem Client entspricht (S8), wobei die verschlüsselte Server-Segment-Kennung und die verschlüsselte Client-Segment-Kennung nicht nur eine Route und eine Übertragung des zweiten Service-Pakets angeben, sondern auch angeben, dass die Quelladresse und die Zieladresse des zweiten Service-Pakets verschlüsselt werden sollen; und
Verschlüsseln der Quelladresse und der Zieladresse des zweiten Service-Pakets unter Verwenden eines öffentlichen Schlüssels des Clients gemäß der verschlüsselten Client-Segment-Kennung, um ein verschlüsseltes zweites Service-Paket zu erhalten, und Senden des verschlüsselten zweiten Service-Pakets an den Client (S9).

6. Verfahren zum Verarbeiten eines Pakets nach Anspruch 5, ferner umfassend:
vor dem Entschlüsseln der Quelladresse und der Zieladresse des ersten Service-Pakets unter Verwenden des privaten Schlüssels des Servers, als Reaktion auf eine Service-Registrierungsanforderung, die von dem Server an eine Service-Verwaltungs-Steuerung gesendet wird, Konfigurieren der verschlüsselten Server-Segment-Kennung und Herstellen einer Abbildungsbeziehung zwischen der verschlüsselten Server-Segment-Kennung und der Adresse des Servers (S7a); und
Senden der Service-Registrierungsanforderung an die Service-Verwaltungs-Steuerung und Empfangen einer Service-Registrierungsantwort, die von der Service-Verwaltungs-Steuerung zurückgemeldet wird (S7b).

7. Verfahren zum Verarbeiten eines Pakets nach Anspruch 5, ferner umfassend:
Herstellen einer Abbildungsbeziehung zwischen einer verschlüsselten Client-Segment-Kennung, die unter Verwenden des öffentlichen Schlüssels des Clients verschlüsselt wird, und der verschlüsselten Client-Segment-Kennung, Herstellen einer Abbildungsbeziehung zwischen der verschlüsselten Server-Segment-Kennung, die unter Verwenden des öffentlichen Schlüssels des Clients verschlüsselt wird, und der Adresse des Servers (S10);
Ersetzen einer Quelladresse eines vierten Service-Pakets, das von dem Server an den Client gesendet werden soll, durch die verschlüsselte Server-Segment-Kennung, die unter Verwenden des öffentlichen Schlüssels des Clients verschlüsselt wird, und Ersetzen einer Zieladresse des vierten Service-Pakets durch die verschlüsselte Client-Segment-Kennung, die unter Verwenden des öffentlichen Schlüssels des Clients verschlüsselt wird, wobei die Zieladresse des vierten Service-Pakets die verschlüsselte Client-Segment-Kennung ist (S11); und
Senden des vierten Service-Pakets an den Client (S12).

8. Verfahren zum Verarbeiten eines Pakets nach Anspruch 5, wobei die Service-Vorrichtung ferner ein Server-Gateway umfasst; und
das Senden eines verschlüsselten zweiten Service-Pakets an den Client umfasst:
gemäß einer Adresse des Server-Gateways, einer Adresse eines Zwischenknotens in einer Verbindung und einer Adresse eines Client-Gateways, das dem Client entspricht, Erzeugen, durch das Server-Gateway, einer Tunnelkopfzeile und einer Segment-Routingerweiterungskopfzeile in einer äußeren Schicht des zweiten Service-Pakets, und Senden eines verarbeiteten zweiten Service-Pakets an das Client-Gateway (S901).

9. Client-Endvorrichtung, umfassend:
mindestens einen Prozessor (101); und
einen Speicher (102), der konfiguriert ist, um mindestens ein Computerprogramm zu speichern;
wobei das mindestens eine Computerprogramm, das durch den mindestens einen Prozessor (101) ausgeführt wird, den mindestens einen Prozessor (101) veranlasst, das Verfahren zum Verarbeiten eines Pakets nach einem der Ansprüche 1 bis 4 zu implementieren.

10. Server-Endvorrichtung, umfassend:
mindestens einen Prozessor (201); und
einen Speicher (202), der konfiguriert ist, um mindestens ein Computerprogramm zu speichern;
wobei das mindestens eine Computerprogramm, das durch den mindestens einen Prozessor (201) ausgeführt wird, den mindestens einen Prozessor (201) veranlasst, das Verfahren zum Verarbeiten eines Pakets nach einem der Ansprüche 5 bis 8 zu implementieren.

11. Computerlesbares Medium, auf dem ein Computerprogramm gespeichert ist, wobei das Computerprogramm, das durch einen Prozessor ausgeführt wird, den Prozessor veranlasst, das Verfahren zum Verarbeiten eines Pakets nach einem der Ansprüche 1 bis 4 zu implementieren.

12. Computerlesbares Medium, auf dem ein Computerprogramm gespeichert ist, wobei das Computerprogramm, das durch einen Prozessor ausgeführt wird, den Prozessor veranlasst, das Verfahren zum Verarbeiten eines Pakets nach einem der Ansprüche 5 bis 8 zu implementieren.

## Revendications

1. Procédé de traitement de paquets, réalisé par un dispositif de terminal client comprenant un client, comprenant :
remplacer une adresse source d'un premier paquet de service à envoyer du client à un serveur par un identifiant de segment de client crypté correspondant au client, une adresse de destination du premier paquet de service étant un identifiant de segment de serveur crypté correspondant au serveur (S1), l'identifiant de segment de client crypté et l'identifiant de segment de serveur crypté indiquant non seulement un itinéraire et une transmission du premier paquet de service, mais indiquant également que l'adresse source et l'adresse de destination du premier paquet de service doivent être cryptées ;
crypter l'adresse source et l'adresse de destination du premier paquet de service en utilisant une clé publique du serveur selon l'identifiant de segment de serveur crypté pour obtenir un premier paquet de service crypté, et transmettre le premier paquet de service crypté au serveur (S2) ; et
recevoir un second paquet de service envoyé par le serveur, décrypter une adresse source et une adresse de destination du second paquet de service en utilisant une clé privée du client, et remplacer l'adresse de destination du second paquet de service par une adresse du client, l'adresse de destination du second paquet de service étant l'identifiant de segment de client crypté crypté par le dispositif de terminal serveur en utilisant une clé publique du client (S3).

2. Procédé de traitement de paquets selon la revendication 1, comprenant en outre :
avant de remplacer l'adresse source du premier paquet de service à envoyer du client au serveur par l'identifiant de segment de client crypté correspondant au client, en réponse à une demande d'autorisation de service envoyée du client au serveur, configurer l'identifiant de segment de client crypté, et établir une relation de mappage entre l'identifiant de segment de client crypté et l'adresse du client (S01) ; et
envoyer la demande d'autorisation de service au serveur, et recevoir une réponse d'autorisation de service renvoyée par le serveur, la réponse d'autorisation de service comprenant l'identifiant de segment de serveur crypté (S02).

3. Procédé de traitement de paquets selon la revendication 1, comprenant en outre :
établir une relation de mappage entre un identifiant de segment de client crypté crypté en utilisant la clé publique du serveur et l'adresse du client, et établir une relation de mappage entre l'identifiant de segment de serveur crypté crypté en utilisant la clé publique du serveur et l'identifiant de segment de serveur crypté (S4) ;
remplacer une adresse source d'un troisième paquet de service à envoyer du client au serveur par l'identifiant de segment de client crypté crypté en utilisant la clé publique du serveur, et remplacer une adresse de destination du troisième paquet de service par l'identifiant de segment de serveur crypté crypté en utilisant la clé publique du serveur, l'adresse de destination du troisième paquet de service étant l'identifiant de segment de serveur crypté (S5) ; et
envoyer le troisième paquet de service au serveur (S6).

4. Procédé de traitement de paquets selon la revendication 1, dans lequel le dispositif de terminal client comprend en outre une passerelle de client ; et
l'étape consistant à transmettre le premier paquet de service crypté au serveur comprend :
selon une adresse de la passerelle de client, une adresse d'un nœud intermédiaire dans une liaison et une adresse d'une passerelle de serveur correspondant au serveur, générer, par la passerelle de client, un en-tête de tunnel et un en-tête d'extension de routage de segment dans une couche externe du premier paquet de service, et transmettre le premier paquet de service traité à la passerelle de serveur (S201).

5. Procédé de traitement de paquets, réalisé par un dispositif de terminal serveur comprenant un serveur, comprenant les étapes consistant à :
recevoir un premier paquet de service envoyé par un client, décrypter une adresse source et une adresse de destination du premier paquet de service en utilisant une clé privée du serveur, et remplacer l'adresse de destination du premier paquet de service par une adresse du serveur, l'adresse source du premier paquet de service étant un identifiant de segment de client crypté crypté par un dispositif de terminal client en utilisant une clé publique du serveur, et l'adresse de destination du premier paquet de service étant un identifiant de segment de serveur crypté crypté par le dispositif de terminal client en utilisant la clé publique du serveur (S7) ;
remplacer une adresse source d'un deuxième paquet de service à envoyer du serveur au client par un identifiant de segment de serveur crypté correspondant au serveur, une adresse de destination du deuxième paquet de service étant un identifiant de segment de client crypté correspondant au client (S8), l'identifiant de segment de serveur crypté et l'identifiant de segment de client crypté indiquant non seulement un itinéraire et une transmission du deuxième paquet de service, mais indiquant également que l'adresse source et l'adresse de destination du deuxième paquet de service doivent être cryptées ; et
crypter l'adresse source et l'adresse de destination du second paquet de service en utilisant une clé publique du client selon l'identifiant de segment de client crypté pour obtenir un second paquet de service crypté, et transmettre le second paquet de service crypté au client (S9).

6. Procédé de traitement de paquets selon la revendication 5, comprenant en outre les étapes consistant à :
avant de décrypter l'adresse source et l'adresse de destination du premier paquet de service en utilisant la clé privée du serveur, en réponse à une demande d'enregistrement de service envoyée du serveur à un contrôleur de gestion de service, configurer l'identifiant de segment de serveur crypté, et établir une relation de mappage entre l'identifiant de segment de serveur crypté et l'adresse du serveur (S7a) ; et
transmettre la demande d'enregistrement de service au contrôleur de gestion de service, et recevoir une réponse d'enregistrement de service renvoyée par le contrôleur de gestion de service (S7b).

7. Procédé de traitement de paquets selon la revendication 5, comprenant en outre les étapes consistant à :
établir une relation de mappage entre un identifiant de segment de client crypté crypté en utilisant la clé publique du client et l'identifiant de segment de client crypté, établir une relation de mappage entre l'identifiant de segment de serveur crypté crypté en utilisant la clé publique du client et l'adresse du serveur (S10) ;
remplacer une adresse source d'un quatrième paquet de service à envoyer du serveur au client par l'identifiant de segment de serveur crypté crypté en utilisant la clé publique du client, et remplacer une adresse de destination du quatrième paquet de service par l'identifiant de segment de client crypté crypté en utilisant la clé publique du client, l'adresse de destination du quatrième paquet de service étant l'identifiant de segment de client crypté (S11) ; et
transmettre le quatrième paquet de service au client (S12).

8. Procédé de traitement de paquets selon la revendication 5, dans lequel le dispositif de service comprend en outre une passerelle de serveur ; et
l'étape consistant à transmettre un second paquet de service crypté au client comprend :
selon une adresse de la passerelle de serveur, une adresse d'un nœud intermédiaire dans une liaison et une adresse d'une passerelle de client correspondant au client, générer, par la passerelle de serveur, un en-tête de tunnel et un en-tête d'extension de routage de segment dans une couche externe du deuxième paquet de service, et transmettre un deuxième paquet de service traité à la passerelle de client (S901).

9. Dispositif de terminal client, comprenant :
au moins un processeur (101) ; et
une mémoire (102) configurée pour stocker au moins un programme informatique ;
l'au moins un programme informatique, exécuté par l'au moins un processeur (101), amène l'au moins un processeur (101) à mettre en œuvre le procédé de traitement de paquets selon l'une quelconque des revendications 1 à 4.

10. Dispositif de terminal serveur, comprenant :
au moins un processeur (201) ; et
une mémoire (202) configurée pour stocker au moins un programme informatique ;
l'au moins un programme informatique, exécuté par l'au moins un processeur (201), amène l'au moins un processeur (201) à mettre en œuvre le procédé de traitement de paquets selon l'une quelconque des revendications 5 à 8.

11. Moyen lisible par ordinateur sur lequel est stocké un programme informatique, le programme informatique, exécuté par un processeur, amène le processeur à mettre en œuvre le procédé de traitement de paquets selon l'une quelconque des revendications 1 à 4.

12. Moyen lisible par ordinateur sur lequel est stocké un programme informatique, le programme informatique, exécuté par un processeur, amène le processeur à mettre en œuvre le procédé de traitement de paquets selon l'une quelconque des revendications 5 à 8.
